(19) Europäisches Patentamt
European Patent Office
Office européen des brevets

(11) **EP 3 407 682 B1**

(12) **EUROPEAN PATENT SPECIFICATION**

(45) Date of publication and mention
of the grant of the patent:
**08.11.2023  Bulletin 2023/45**

(21) Application number: **18172053.3**

(22) Date of filing: **14.05.2018**

(51) International Patent Classification (IPC):
**H05B 45/38** (2020.01)    **H05B 45/30** (2020.01)
**H05B 45/385** (2020.01)

(52) Cooperative Patent Classification (CPC):
**H05B 45/38; H05B 45/30; H05B 45/385;**
H05B 45/36; Y02B 20/30

(54) **CONVERTER DEVICE**

WANDLERVORRICHTUNG

DISPOSITIF CONVERTISSEUR

(84) Designated Contracting States:
**AL AT BE BG CH CY CZ DE DK EE ES FI FR GR HR HU IE IS IT LI LT LU LV MC MK MT NL NO PL PT RO RS SE SI SK SM TR**

(30) Priority: **22.05.2017  GB 201708227**

(43) Date of publication of application:
**28.11.2018  Bulletin 2018/48**

(73) Proprietor: **Tridonic GmbH & Co. KG**
**6851 Dornbirn (AT)**

(72) Inventors:
• **Kelly, Jamie**
**Tyne & Wear, NE29 8AH (GB)**
• **Makwana, Deepak**
**Newcastle upon Tyne, NE4 8UB (GB)**
• **Jagjitpati, Shukla**
**County Durham, DL16 6DR (GB)**

(74) Representative: **Beder, Jens**
**Mitscherlich PartmbB**
**Patent- und Rechtsanwälte**
**Karlstraße 7**
**80333 München (DE)**

(56) References cited:
**US-A1- 2011 210 681**

• **PARK KI-BUM ET AL: "Coupled-inductor boost converter with simple resonant technique", IECON 2013 - 39TH ANNUAL CONFERENCE OF THE IEEE INDUSTRIAL ELECTRONICS SOCIETY, IEEE, 10 November 2013 (2013-11-10), pages 584-589, XP032538649, ISSN: 1553-572X, DOI: 10.1109/IECON.2013.6699200 [retrieved on 2013-12-30]**
• **YAO JIA ET AL: "Analysis and Design of Charge Pump-Assisted High Step-Up Tapped Inductor SEPIC Converter With an Inductorless Regenerative", IEEE TRANSACTIONS ON POWER ELECTRONICS, INSTITUTE OF ELECTRICAL AND ELECTRONICS ENGINEERS, USA, vol. 30, no. 10, 31 October 2015 (2015-10-31), pages 5565-5580, XP011582428, ISSN: 0885-8993, DOI: 10.1109/TPEL.2014.2374992 [retrieved on 2015-05-22]**
• **Unknown: "AN2761 Application note - Solution for designing a transition mode PFC preregulator with the L6562A Contents", , 31 December 2009 (2009-12-31), pages 1-36, XP093027213, Retrieved from the Internet: URL:https://www.st.com/resource/en/applica tion_note/an2761-solution-for-designing-a-transition-mode-pfc-preregulator-with-the-l6562a-stmicroelectronics.pdf [retrieved on 2023-02-27]**

EP 3 407 682 B1

**Description**

The invention relates to the field of switched mode power supplies, in particular to converters adapted to operate from energy storages and used in lighting applications such as emergency converters. In particular, the invention proposes a fast closed loop system in a converter using a microcontroller and a corresponding method for controlling such converter.

Emergency lighting for buildings relies on battery backed lighting devices that switch on automatically in an emergency mode of operation, when a power outage is detected. An emergency lighting system includes an energy storage device such as a battery, in particular rechargeable batteries for storing electric energy, a battery charger for maintaining the energy storage device at a predetermined charging level. A microcontroller is typically used to control the battery charger. An emergency lighting system further uses a lamp driver, for example a LED driver (ballast, emergency converter) for driving lighting means from the energy storage device for a predetermined time with a predetermined current in the emergency mode of operation. The emergency converter usually includes a switched mode power supply (SMPS) operating from a DC voltage supplied by the energy storage device and generating a required DC output voltage for driving lighting means, for example LEDs of an emergency lamp. The emergency converter may be implemented for example in in form of a boost converter or a similar circuit topology and includes at least one energy storage element, an inductor and/or a capacitor and a controlled switch. The emergency converter also requires a controller, usually an integrated circuit (driver IC) for controlling the emergency converter, in particular the switch in case of an emergency mode of operation. Due to the high switching frequencies employed in contemporary SMPS, the requirements with respect to timing are high and exceed the capabilities of cost effective microcontrollers and are usually met by dedicated application specified integrated circuits (ASICS) employed as LED driver ICs for controlling the LED driver of the emergency converter.

US 2011/0210681 discloses an operating device for operating at least one illuminant, such as one or more LEDs. The operating device includes first and second converters and first and second logic circuits. The first converter is supplied directly or indirectly with mains voltage with a first reference potential. The second converter is galvanically isolated from the first converter, and has a second reference potential for supplying a load circuit including the illuminant. The first logic circuit controls the first converter, and the second logic circuit controls the second converter. The first logic circuit and the second logic circuit are connected to one another with potential isolation via an interface. Moreover, an integrated inverter controller for lighting applications is know from the "AN2761 Application note - Solution for designing a transition mode PFC preregulator with the L6562A Contents",, 31 December 2009 (2009-12-31), pages 1-36.

The invention addresses the problem of providing a cost effective solution for controlling a converter for emergency lighting applications.

The independent claims define the invention. The dependent claims define further advantageous features.

The converter device according to claim 1 and the corresponding method for operating a converter device address the technical problem.

The inventive converter device, in particular an emergency lighting converter, operates from an energy storage device and the converter device comprises a charger circuit for charging the energy storage device, a driver circuit including a switch, and a microcontroller circuit for controlling the charger circuit. The converter device is characterized in that the microcontroller circuit is further configured to control the switch in a mode in which the light driver circuit is operated from the power storage device.

The converter device according to claim 1 employs the microcontroller of the battery charger also to control the driver circuit and accordingly dispenses with the need for a dedicated light driver IC for controlling the light driver circuit. Thus, the number of complex electronic elements, the space requirements for the emergency converter, the respective manufacturing efforts as well as the involved costs are advantageously reduced.

Further embodiments of the converter device are claimed in the dependent claims.

The converter device according to a preferred embodiment implements the driver circuit in a coupled inductor boost circuit topology.

The coupled inductor boost circuit topology, also termed tapped boost or tapped inductor boost topology, enables to implement a particularly advantageous control strategy for controlling the driver circuit. The coupled inductor boost topology employs at least two coupled inductors as energy storing elements, or alternatively and equivalently an inductor with a tap. A tapped inductor is an inductor, which includes a contact at a point, for example halfway, along a winding of the inductor. The tap contact of the tapped inductor is connected via switch, for example a transistor, a bipolar transistor a MOSFET, IGBT, to a ground of the driver circuit. An equivalent circuit structure may be implemented using two or more inductors in a boost converter. Using this structure enables to implement a particular advantageous control strategy using zero crossing information of a inductor current and information on a discharge current of the energy storage device which enables to implement the control strategy for controlling the switch of the light driver circuit via the microcontroller circuit.

The converter device according to an embodiment comprises the driver circuit configured to provide to the microcontroller circuit a first signal including information on a discharge current of the power storage device.

The discharge current of the energy storage device provides a measure for the time the emergency mode of operation, in particular for what time emergency light can be supplied by the light driver circuit from the energy storage device. Using the first signal enables to implement an efficient control strategy in the microcontroller circuit in particular for use in an emergency light controller.

A further advantageous embodiment includes the driver circuit of the converter device to provide to the microcontroller circuit a second signal including information when a current through an inductor of the driver circuit reaches zero, crosses zero or changes polarity. This information is acquired for determining the time when the switch is closed, in particular during a time duration during which the switch has to be not conducting, and is contained in the second signal available to the microcontroller circuit. It enables the microcontroller circuit to determine a time when the switch is to be closed for controlling the coupled inductor boost converter in a boundary conduction mode of operation.

The converter device of a preferred embodiment includes the first signal and the second signal which are provided to the microcontroller circuit to be analogue signals. Accordingly the microcontroller is enabled to implement the control strategy for the coupled inductor boost converter using comparators for an analogue comparison. Using the analogue comparator circuits of the microcontroller provides for a fast signal processing and is therefore particular advantageous for controlling the driver circuit by the microcontroller circuit. A dedicated light driver IC according to prior art is therefore to be easily replaced by microcontroller circuit. No software is involved in the generation of a signal switching the driver circuit's switch.

An advantageous converter device has a microcontroller circuit, which is configured to generate such a switch drive signal for controlling the switch of the driving circuit and to provide the generated switch drive signal to the switch. The switch drive signal, for example a gate signal for a transistor used as switch, is adapted to maintain a predetermined current value of the discharge current from the energy storage device.

The generated drive signal output by the microcontroller circuit is in particular adapted to control a time duration during which the switch is closed. Thus the duration of time during which the switch is closed is varied in order maintain a constant battery discharge current.

The converter device according to an embodiment includes the switch drive signal generated by the microcontroller circuit to be adapted to control a time period in which the switch is closed, wherein the microcontroller circuit determines the point in time at which the switch is closed based on the second signal. The second signal includes information when the current through the inductor during the time the switch is open reverses its polarity. Thus, a second cycle of the control of the lighting device is started by the control strategy implemented in the microcontroller circuit using the zero crossing information on the inductor current. A boundary conduction mode for the coupled inductor boost converter is accordingly easily implemented using the first and second signal. The converter device according to embodiment is therefore able to use the microcontroller circuit to control the driver circuit to operate in a boundary conduction mode and perform cycle to cycle control.

The technical problem is also solved by a method for controlling a converter device, in particular an emergency lighting converter operating from an energy storage device. The converter device comprises a charger circuit for charging the energy storage device, a driver circuit including a switch and a microcontroller circuit for controlling the charger circuit. The microcontroller circuit also controls the switch in a mode in which the light driver circuit is operated from the energy storage device.

According to an embodiment of the method the microcontroller circuit obtains a first signal containing information on a discharge current of the power storage device from the light driver circuit.

The microcontroller according to one embodiment obtains a second signal containing information when a current through an inductor of the light driver circuit reaches zero.

Advantageously, a switch drive signal for controlling the switch in order to maintain a predetermined discharge current from the energy storage device is generated and provided to the switch.

The description of an embodiment of the invention refers to the enclosed drawings in which

Fig. 1　　　provides a general overview of major elements of a converter device according to an embodiment,

Fig. 2　　　is a general overview of major elements of a converter device according to prior art,

Fig. 3　　　provides an overview of major elements of a microcontroller circuit replacing a dedicated controller IC for controlling a coupled inductor boost converter,

Fig. 4　　　provides a simplified schematic circuit diagram of a preferred embodiment with a converter device in coupled inductor boost topology controlled by a microcontroller circuit,

Fig. 5A, B, C　　shows typical circuit waveforms of a coupled inductor boost converter,

Fig. 6        depicts signal waveforms for controlling the coupled inductor boost converter by a microcontroller circuit according to the invention, and

Fig. 7        shows a flowchart of a method performing the control of an emergency converter according to an embodiment.

In the figure, same numerals denote the same or corresponding elements. For sake of conciseness, the description of the figures omits repeating the description of same reference signs for different figures.

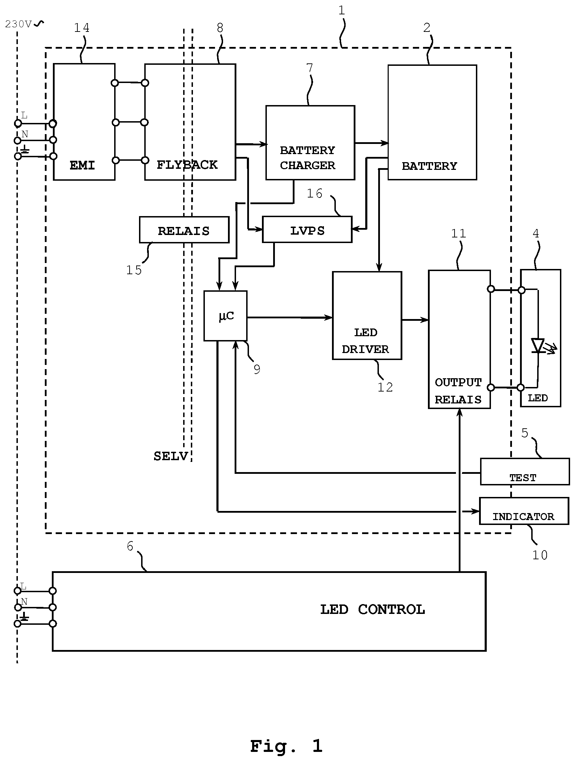

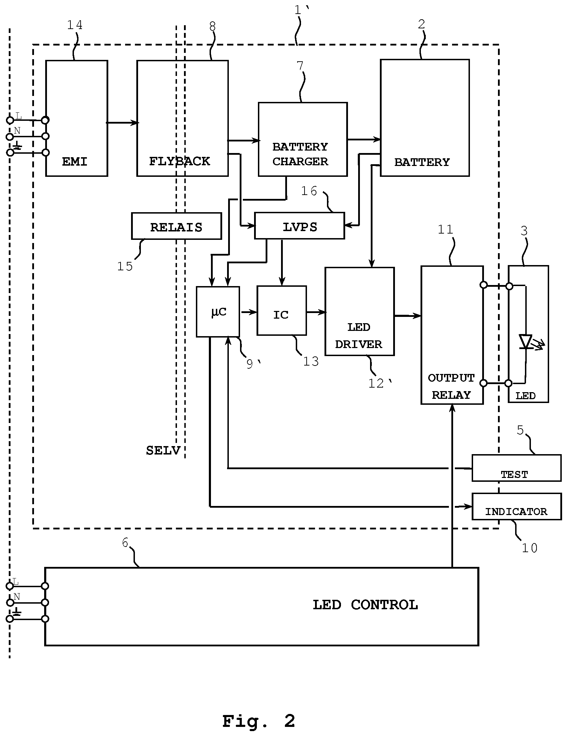

Before presenting an embodiment of the invention based on fig. 1, a general overview of major elements of a known emergency converter device for driving an emergency light from an energy storage device, for example a battery and in particular a rechargeable battery, is provided based on Fig. 2.

A usual method to provide emergency lighting are battery backed emergency converter devices 1' that are installed within or adjacent to existing lighting fixtures. Upon sensing mains supply failure, the emergency converter devices 1' switch into an emergency mode turning the existing lighting into emergency lighting in order to meet both the requirements of an emergency lighting without the need of wiring separate emergency lighting circuits or additional wall mounts.

The depicted known emergency lighting converter device 1' includes mains supply input terminals for interfacing mains supply, in particular neutral line N, switched line L and ground line.

The emergency lighting converter 1' is a battery backed lighting device that switches automatically when the main light becomes unavailable due to a mains power outage. The main functionalities of the shown emergency lighting converter device 1' are to charge a battery 2 and to monitor mains supply. If the emergency lighting converter device 1' detects a mains supply failure, in particular if the mains supply voltage falls below a predefined threshold value, the emergency lighting device 1' drives a light emitting load, for example an emergency light 3 such as a LED module 3 including one or more LEDs, for a predetermined time with a predetermined load current.

The emergency light converter 1' usually has an integrated test switch or alternatively or additionally an interface for a test switch 5 (test button) which is adapted to temporally override a standard lighting converter 6 and cause the emergency lighting converter 1' to drive the LED module 3 from battery power even if the mains power supply is available.

The known emergency lighting converter 1' includes a battery charger 7 for charging the energy storage device 2 from a DC current provided by the flyback converter 8. The battery charger circuit 7 is controlled by a microcontroller circuit 9. The microcontroller circuit 9 also includes an electric interface for the test switch 5 and an indicator LED 10.

The emergency light converter 1' also includes an output relay 11. The output relay 11 alternately switches a first relay input which is connected to an LED driver 12 (emergency LED driver 12) or a second relay input connected to the standard LED converter 6 to a relay output connected to the LED module 3. In case a mains supply failure is determined, the LED driver 12 provides a predefined LED drive current via the output relay 10 to the LED module 3. In case the mains supply is determined to be working correctly, the standard LED converter 6 provides the LED current for driving the LED module 3 via the output relay 11 to the LED module 3.

The LED driver 12 is a switched mode power supply, which receives a DC voltage input from the energy storage device 2 and provides the emergency LED load current to the output relay 11. The LED driver 12 is implemented in one of generally known boost converter topologies. A boost converter, also termed step-up converter, is a DC-to DC power converter that steps up a voltage from its input (battery) to its output (load). The input voltage range from the energy storage device 2 is typically 3V to 8.2V. The output voltage range of the LED driver 12 is typically from 10V to 200V. A boost converter is a switched mode power supply, which contains at least one a diode and a controlled switch, in particular a bipolar transistor such as a MOSFET, a IGBT working as a switch, and a at least one energy storage element, preferably an inductor and/ or a capacitor. Further capacitors are often arranged at the input or at the output of the coupled inductor boost converter, for example in order to suppress or at least reduce voltage ripple.

The switch of the LED driver circuit 12 is controlled via a LED driver integrated circuit (IC) 13. The LED driver IC 13 regulates the energy storage discharge current drawn from the energy storage device 2, controls the LED driver circuit 12 to step up tan input voltage applied from the energy storage device 2 to the LED driver circuit 12 to a higher voltage provided to the LED module 3 by large factor, operates the switch of the LED driver circuit 12 at a high switching frequency and controls the LED driver circuit 12 at a high duty cycle.

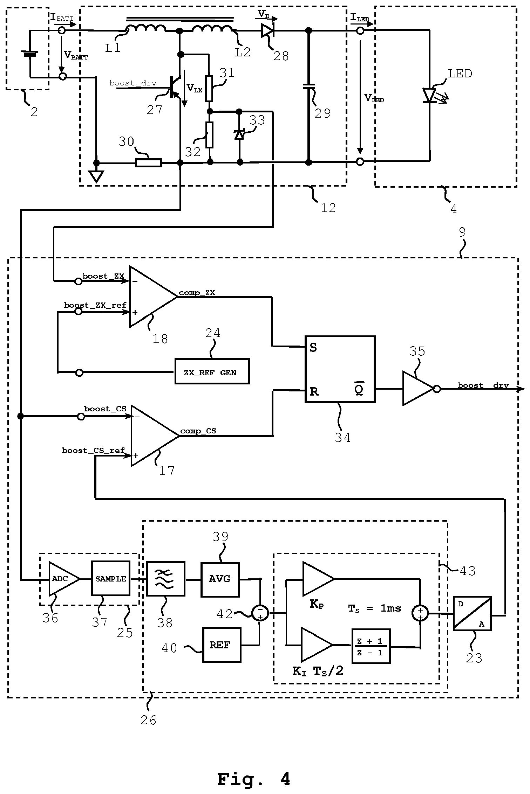

An EMI circuit 14 is arranged at the mains supply input of the emergency converter device 1' in order to filter the mains supply voltage input to the flyback converter 8. The flyback converter 8 can be adapted to provide galvanic isolation in order to separate a high voltage side of the emergency light converter device 1' from a low voltage side creating a SELV barrier. Control and monitoring signals are guided across the SELV barrier using suitable elements such as a relay 15 or an optocoupler not shown in fig. 4.

Typically on the low voltage side of the SELV barrier, the emergency lighting device arranges a low voltage power supply (LVPS) 16. The LVPS 16 generates low supply voltages and provides the generated low power supply voltages to the microcontroller circuit 9 and the LED driver IC 13 and other elements of the emergency converter device 1'. The input to the LVPS 16 is from the energy storage device 2 in an emergency mode of operation, or from the fly back converter 8 in a standard mode of operation at times of a working mains power supply.

Fig. 1 provides a general overview of major elements of the emergency lighting converter device 1 according to an embodiment of the invention.

In Fig. 1 the same numerals apply as in fig. 2 depicting an emergency lighting converter according to prior art. The emergency lighting device 1 differs from fig. 2 by including a LED driver circuit 12 in a coupled inductor boost configuration. The circuit topology of the coupled inductor boost converter 12 will be described in detail with respect to fig. 4 below. The emergency lighting converter device 1 differs further from prior art by including a microcontroller 9 instead of the microcontroller 9' of prior art. The combination of the LED driver circuit 12 in coupled inductor boost configuration with the microcontroller 9' accordingly omits the dedicated LED driver IC 11. This particular combination of LED driver circuit 12 in coupled inductor boost configuration with the microcontroller 22 which integrates the LED driver control function with the battery charger control function accordingly minimizes cost and reduces space requirements due to omitting the LED driver IC 11 by redistributing its functionalities.

Employing the coupled inductor boost topology for the LED driver circuit 12 enables to regulate the battery discharge current based on sensed signals using at least one low cost shunt resistor 30 which is at one side referenced to energy storage device ground potential.

Furthermore, the LED driver circuit 12 in coupled inductor boost topology is capable to step-up the input battery voltage by a large factor, to operate at a high switching frequency and high duty cycle, in particular when compared to standard boost converter topology.

The high switching frequency operation of the LED driver circuit 12 results in a simple winding structure of the inductor (boost choke) of the boost converter circuit. The simple winding structure goes along with reduced size of the inductor. Usually the inductor is one of the cost increasing circuit elements, which also requires a significant proportion of the space of a boost converter circuit.

The cost of the entire emergency converter device 1 are reduced when compared to known approaches, as the dedicated LED driver IC 13 is not required and the microcontroller circuit 12 according to the invention is additionally used to implement switch control for the LED driver circuit 12.

Even a single shunt resistor 30 can be used in order to sense a peak current over the switch on one hand and the average battery discharge current on the other hand.

According to the inventive solution, low voltage stress onto the switch of the LED driver circuit 12 enables to select a transistor switch with low $R_{ds}$ (on) when being switched on and the drain-source junction of the transistor switch is in a conducting state. A switch rated for lower voltages can be selected and cost is accordingly further reduced for the inventive approach.

The number of circuit components of microcontroller circuit 9 with LED driver circuit 12 is reduced when compared to microcontroller circuit 9', LED drive IC 13 and LED driver circuit 12', in particular due to eliminating the dedicated driver IC 13.

Moreover, the capability of operating the switch at a zero current values results in a high efficiency equal or higher than 80 %. The coupled inductor boost converter preferably operates in the boundary conduction mode (critical conduction mode).

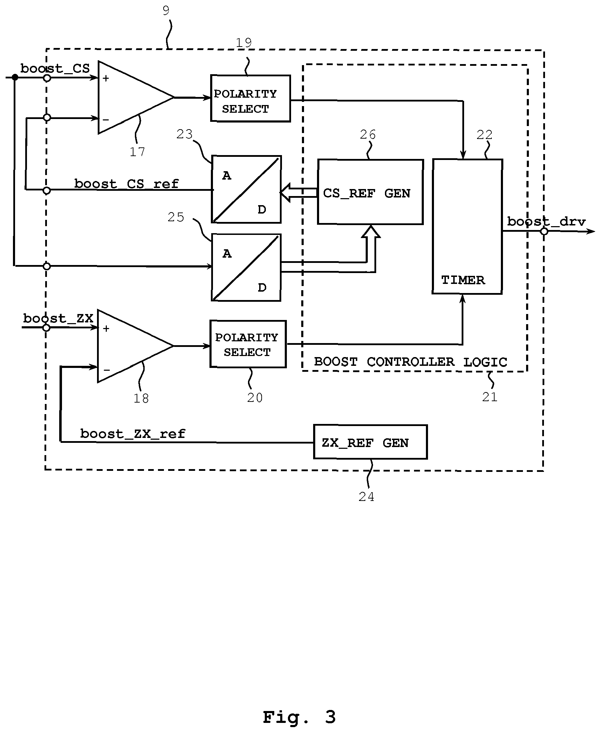

Fig. 3 shows major elements of a microcontroller circuit 9 used for replacing the dedicated LED driver IC 13 for controlling the coupled inductor boost converter used as LED driver circuit 12. The microcontroller circuit 9 includes analogue comparators 17, 18, two of which are used for on one hand sensing the inductor current and one for detecting a zero crossing of the inductor current on the other hand. The output signal of each comparator 17, 18 is fed internally via a polarity selection circuit 19, 20 of the microcontroller circuit 9 to a boost controller logic 21, preferably including a timer 22. The boost controller logic 21 of the microcontroller circuit 9 generates a boost driver signal boost_drv for controlling the switch of the LED driver circuit 12. The microcontroller circuit 9 further generates first and second reference signals. The first reference signal is an analogue current reference signal boost_CS_ref, which is generated by the boost controller logic 21 as a digital signal, provided to a digital-analogue converter (DAC) 23 of the microcontroller circuit 22 for conversion into the analogue current reference signal boost CS_ref, which is subsequently provided to a second inverting input of the first comparator circuit 17.

The Microcontroller circuit 9 preferably acquires the analogue signal boost_CS from the LED driver circuit 12, converts the the analogue signal boost_CS in analog-to-digital converter (ADC) 25 into an digital signal boost_CS and provides the digital signal boost_CS to a CS reference generator 26 of the microcontroller circuit 9 and its boost controller logic 21. The CS reference generator 26 uses the digital boost_CS to generate the digital current reference signal boost CS_ref.

The first non-inverting input of the first comparator 17 is provided with the analogue signal boost_CS from the LED driver circuit 12.

A zero-crossing reference signal boost_ZX_ref is generated by the microcontroller circuit 9, in particular its ZX reference generator 24 and fed to a second inverting input of the second comparator 18. The first non-inverting input of the second comparator 18 receives the analogue signal boost_ZX provided from the LED driver circuit 12.

Using the microcontroller circuit 9 as shown, and in particular the first comparator 17 for sensing the inductor current, and the second comparator 18 for determining the zero-crossing of the inductor current, is independent from any software, but uses analogue resources of the microcontroller circuit 9. Hence, the inventive approach provides advantageously fast reaction time not available by digital microcontroller circuits and software-based solutions, similar only to using a dedicated application-specific integrated circuits (ASIC).

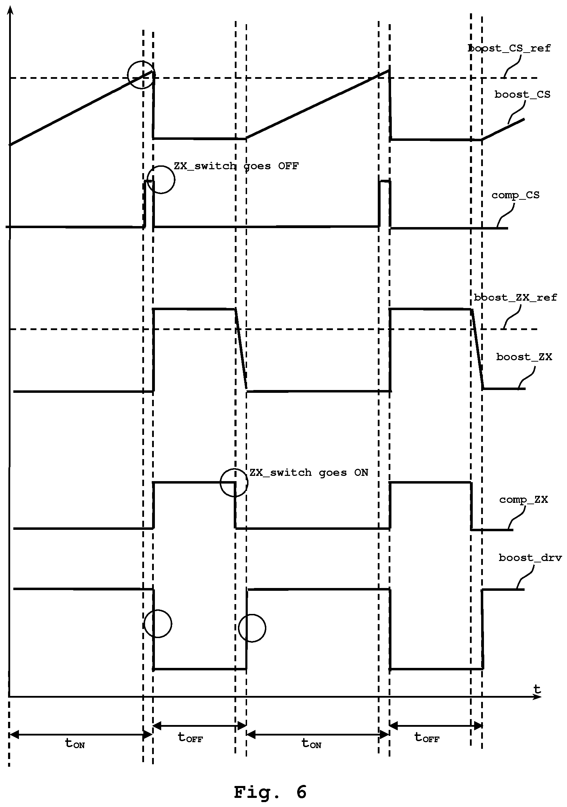

In order to generate the switch control signal boost_drv for controlling the switch, for example a gate drive signal of a transistor 27 for generating a pulse width modulation, the microcontroller circuit 9 uses an internal timer 22. Preferably, the timer 22 is running free with a defined duty cycle. Fig. 6 shows how the duty cycle of a LED drive signal provided by the LED driver circuit 12 is controlled according to the invention.

The inventive approach detects each cycle, cycle per cycle, an inductor current $I_{pk}$ and a zero crossing of the inductor current using the microcontroller circuit 9. Adding a closed loop using the zero crossing detection to trigger a second cycle as the microcontroller circuit 9 does, provides advantageously fast reaction time not available by digital microcontroller 9' according to prior art.

Fig. 4 shows a simplified schematic circuit diagram of a preferred embodiment of the emergency converter device 1 with a LED driver circuit 12 in coupled inductor boost topology controlled by a microcontroller circuit 9.

The coupled inductor boost converter circuit 21 includes two inductors L1 and L2 connected in series. A switch (boost switch) 27 is connected from the ends of the inductors L1, L2 where inductors L1, L2 are connected to ground of the LED driver circuit 12. The main circuit components of the coupled inductor boost circuit topology are complemented by a diode 28. The circuit topology shown in fig. 4 is simplified, further electric elements may be added, for example to a capacitor 29 at the output of the LED driver circuit 12. The LED driver circuit 12 depicted includes a single channel for driving a LED exclusively when a mains supply failure is detected. More than one LED drive channel may be implemented or the LED may be driven via an output relay 10.

The input voltage $V_{BATT}$ supplied by the energy storage device 2 is typically in a range from 3 V to 8.2 V.

The output voltage range $V_{LED}$ provided to the LED module 4 is typically in a range 10 V to 200 V. The LED module may include one or more light emitting diodes LEDs.

The LED driver circuit 12 comprises a shunt resistor $R_{shunt}$ 30 for sensing an average battery discharge current $I_{BATT}$ and a peak boost switch current and provide this information in the signal boost_CS to the microcontroller circuit 9.

The LED drive circuit 12 further detects a zero current over the switch 27 by monitoring a voltage $V_{LX}$ over the switch 27 using the voltage divider formed by resistors 31 and 32. The Z-diode (Zener-diode) 33 serves to clamp an negative electric potential at the input pin of the microcontroller circuit 9 connected to the second comparator 18 of the microcontroller circuit 22. The voltage $V_{LX}$ over the switch 27 is provided as information in the signal boost_ZX to the first input of the second comparator 18.

In particular, the microcontroller circuit 9 senses on cycle-per-cycle basis, each cycle the signals boost_CS and boost_ZX in order to generate the driver control signal boost_drv, preferably as agate control signal to a transistor functioning as switch 27, on the basis of the sensed signals boost_CS and boost_ZX. An embodiment logic how to generate the driver control signal boost_drv is presented with reference to fig. 3 above. Fig. 4 shows a functional equivalent circuit topology using first comparator 17, second comparator 18, a latch 34 and an inverting amplifier 35 to generate the switch drive signal boost_drv from the input signals boost_CS and boost_ZX.

The lower portion of figure 4 depicts an exemplary circuitry for generating the reference signal boost_CS_ref in the CS reference generator 26. The signal boost_CS is provided to an AD converter 25, represented in fig. 4 by an amplifier 36 amplifying the signal boost_CS by the AD converter gain and subsequently sampling the signal in the sample stage 37 to convert the signal boost_CS from a time-continuous signal into a time-discrete signal. The time-discrete signal is then supplied to a low-pass filter 38 and averaged in an averaging stage 39. The filtered and averaged time-discrete signal is subsequently compared to a reference signal to determine an error signal, the reference signal generated by a reference generator 40. The reference generator 40 generates the reference signal representing a reference battery discharge current.

In the shown embodiment of the CS reference generator 26, a subtractor 42 generates a battery discharge current error signal by subtracting the averaged time-discrete signal boost_CS from the reference battery discharge current.

The battery discharge current error signal provides an input signal to a subsequent Proportional-Integral Controller (PI-Controller) 43. By passing the battery discharge current error signal through he PI-controller 43, a steady time-discrete DC signal. The steady time-discrete DC signal is converted to an analogue signal by the digital Analogue converter (AD-) converter 23 and provided as an analogue signal boost_CS_ref to the second input of the first comparator 17. The first comparator 17 uses the analogue signal boost_CS_ref as a peak current reference, in order to to provide control to the switch 27 on a cycle-per-cycle basis. In this peak current mode control, the switch 27 is turned off by the switch drive signal boost_drv when a peak current over the switch 27 reaches the reference peak current generated by the CS reference generator 26.

The ZX_reference generator 24 generates the signal boost_ZX_ref and provides the signal boost_ZX_ref to the second input of the second comparator 18. Preferably, the signal boost_ZX_ref is a threshold voltage for detecting the zero crossing of the current over the switch 27 via the voltage divider including resistors 31, 32. Exemplarily the threshold voltage has a vaule of about 1.25 V. Given this case, a zero current condition is detected when the voltage $V_{LX}$ between drain and source electrode of the switch 27 falls below 1.25 V. When the voltage $V_{LX}$ across the switch 27 falls below 1.25 V, the switch drive signal boost_drv applied to the gate electrode of the transistor switch 27 is set to turn the switch 27 on again.

By switching the switch 27 into a the conducting state when the output current $I_{LED}$ corresponding to a current through the second inductor L2 reaches zero enables to operate the LED driver circuit 12 in the boundary conduction mode of a boost converter, in particular coupled inductor boost converter.

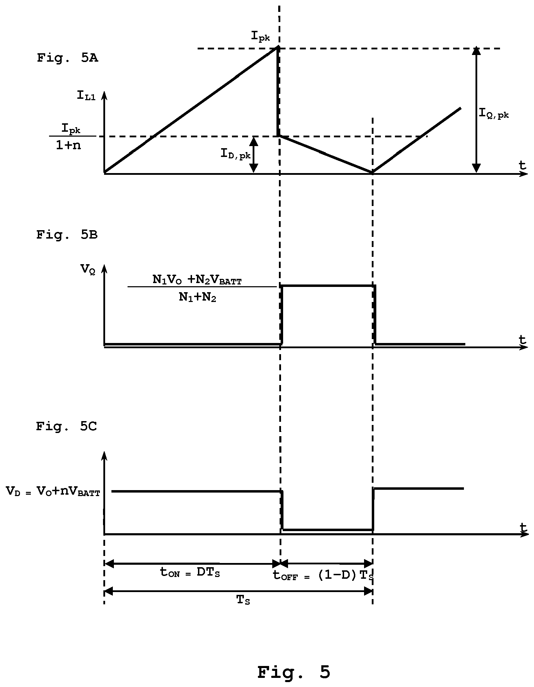

Fig. 5 shows typical circuit waveforms of a coupled inductor boost converter over one cycle of the coupled inductor boost converter. In fig. 5A an inductor current over the inductor L1 of the coupled inductors L1 and L2 is depicted. $I_{pk}$ is a peak current over the inductor L1. $I_{D,pk}$ is a peak current over the diode 28 when the switch 27 is open (not -conducting) during the time interval

$$t_{off} = (1-D) \ T_s; \qquad\qquad (1)$$

D is the duty cycle of the switch 27, n is the relation of an inductor winding $N_1$ of inductor L1 to a number $N_2$ of inductor windings of inductor L2, $T_s$ is a switch period of the switch 27 with

$$T_s = t_{ON} + t_{OFF}; \qquad\qquad (2)$$

In fig. 5B, a voltage $V_{LX}$ over the switch 27 is shown for one cycle or period $T_s$ of the switch 27 and the LED driver circuit 27.

$$V_{LX} = (N_1 V_{LED} + N_2 \ V_{BATT)} \ / \ (N_1 + N_2); \qquad\qquad (3)$$

In (3), $V_{LX}$ denotes the voltage across the switch 27, $N_1$ the number of windings of the first inductor L1 and $N_2$ the number of windings of the second inductor L2. $V_{BATT}$ is the voltage, which the energy storage device 2 provides.

In fig. 5C voltage $V_D$ over the diode 27 is depicted over one cycle. The voltage $V_D$ during the time $t_{ON}$ corresponds to

$$V_D = V_{LED} + n*V_{BATT}; \qquad\qquad (4)$$

and is zero when the switch is off (non conducting) during the time duration torr.

In figure 6 the method for generating the switch drive signal boost_drv based on the cycle per cycle current sense signal boost_CS and zero crossing signal boost_CS signal is shown. More specifically, fig. 6 depicts signal waveforms for controlling the LED driver circuit 12 (coupled inductor boost converter) by a microcontroller circuit 9 according to the invention over two cycles of the switch period $T_s$.

In fig. 6, an output signal of the first comparator 17 is the signal comp_CS, an output signal of the second comparator is the signal comp_ZX.

The signal boost_drv corresponds to a signal which is applied to the gate-drain junction of the transistor functioning a switch 27. When the switch is closed during time duration $t_{on}$ of the first cycle, a current over the inductor L1 increases. The corresponding signal boost_CS raises correspondingly and finally exceeds a threshold defined by the reference signal boost_CS_ref.

The DC error signal output from the PI-controller 43 is then converted into an analogue reference signal boost_CS_reference and provided to the second input of the first comparator 17 as being used as a peak current reference to control the boost switch 27 in peak current mode control on a cycle per cycle basis. Thus, the switch 27 is opened by the switch driver signal boost_drv, when the peak current over the switch 27 reaches the reference peak current generated by the PI-controller 43 as shown in figs. 4 and 6.

The LED driver circuit 12 is operated in a boundary conduction mode. Hence, the switch is turned on again when a current through the inductor L2 reaches zero. The current through the inductor L2 corresponds to the output current $I_{LED}$ to the LED module 4.

The time when the switch 27 is turned on again is determined using the voltage $V_{LX}$ over the switch 27. Preferably, the voltage $V_{LX}$ is measured by using the resistor divider network formed by resistors 31 and 32 in fig. 4. The voltage $V_{LX}$ reaches zero, when the current through the inductor L2 reaches zero. The signal boost_ZX corresponding to the measured value of the voltage $V_{LX}$ is provided to the first input of the second comparator 18. The second input of the second comparator 18 is provided with the reference voltage boost_ZX_ref. If the value of the signal boost_ZX drops below the value boost_ZX_ref, a zero crossing of the current $I_{LED}$ is determined and the switch 27 is switched on again.

In this manner the switch 27 is switched on when the measured voltage across the switch $V_{LX}$ reaches zero. The point in time at which the switch 27 is turned off is when the peak current through the switch 27 reaches the reference peak current generated in the microcontroller circuit 9. The resulting switch drive signal boost_drv is shown as the signal at the bottom of Fig. 6. By the control method implemented in the microcontroller circuit 9, the detection of the zero crossing of the current through the switch 27 is accordingly used to trigger a second cycle of the coupled inductor boost converter used in the LED drive circuit 12. The entire control of the LED drive circuit 12 is exclusively performed using assets of the microcontroller circuit 9. In particular the analogue comparators 17, 18 guaranty a fast signal processing particularly suitable to provide for high switching frequencies of the switch 27. Accordingly, a LED control IC 13 for controlling a switched mode power supply such as LED drive circuit 12' of prior art can be dispensed with when following the inventive approach.

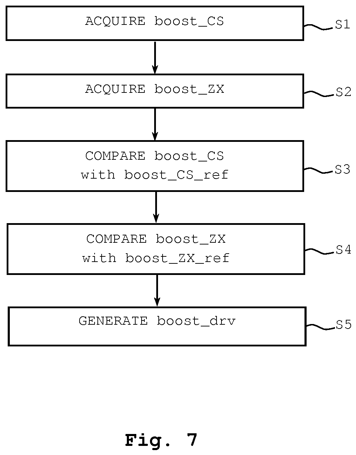

Fig. 7 shows a basic flowchart of a method performing the control of an emergency converter device 1 according to an embodiment. In particular, the method comprises the microcontroller circuit 12 controlling the switch 27 in a mode in which the light driver circuit 12 is operated from the power storage device 2.

The method comprises a first step S1 of the microcontroller circuit 12 obtaining a first signal including information on a discharge current of the power storage device 2 from the light driver circuit 12.

The method proceeds with a step S2 of the microcontroller circuit 9 obtaining a second signal including information if a current through an inductor L2 of the light driver circuit 12 reaches zero.

The method proceeds to step S3 of comparing the first signal including information on the discharge current with a discharge current reference signal.

The method further compares in a step S4 the acquired second signal including information if a current through an inductor L2 of the light driver circuit 21 reaches zero.

In a step S5, the method generates the a switch drive signal boost_drv in order to maintain a predetermined discharge current from the energy storage device 2 and to provide the generated switch drive signal boost_drv to the switch 27 of the lighting drive circuit 12.

**Claims**

1. Converter device, in particular an emergency lighting converter, for operating from an energy storage device (2), the converter device comprising

   a charger circuit (7) configured to charge the energy storage device (2),
   a driver circuit (12) including a switch (27), and
   the converter device further comprises
   a microcontroller circuit (9) configured to control the charger circuit (7), and
   the microcontroller circuit (9) is further configured to generate a switch drive signal (boost_drv) from a first signal (boost_cs) and a second signal (boost_zx) to control the switch (27) in a mode in which the driver circuit (12) is operated from the energy storage device (2), and
   that the driver circuit (12) is configured to provide to an input of a first analogue comparator (17) of the microcontroller circuit (9) the first signal (boost_cs) as an analogue signal containing information on a discharge current of the energy storage device (2), and
   the driver circuit (12) is configured to provide to an input of a second analogue comparator (18) of the microcontroller circuit (9) the second signal (boost_zx) as an analogue signal containing information when a current through an inductor (L2) of the driver circuit (12) reaches zero,
   wherein

   the microcontroller circuit (9) is configured to control the driver circuit (12) in a boundary conduction mode to maintain a predetermined current value of the discharge current ($I_{BATT}$) from the energy storage device (2) **characterized in that**

   the microcontroller circuit (9) is configured to provide to an inverting input of the first comparator circuit (17) of the microcontroller circuit (9) a first analogue reference signal (boost_CS_ref), wherein

an analogue-digital converter (25) of the microcontroller circuit (9) is configured to convert the analogue first signal (boost_CS) into a digital first signal (boost_CS) and to provide the digital first signal (boost_CS) to a CS reference generator (26) of the microcontroller circuit (9), and

the CS reference generator (26) is configured to use the digital first signal (boost_CS) to generate the digital first reference signal (boost_CS_ref) and to provide the digital first reference signal (boost_CS_ref) to a digital-analogue converter (23) of the microcontroller circuit (9), and

the digital-analogue converter (23) of the microcontroller circuit (9) is configured to convert the digital first reference signal (boos_CS_ref) into the analogue first reference signal (boos_CS_ref) and to provide the analogue first reference signal (boost_CS_ref) to the inverting input of the first comparator (17).

2. The converter device according to claim 1, **characterized in that** the driver circuit (12) is implemented in a coupled inductor boost circuit topology.

3. The converter device according one of the preceding claims, **characterized in that** the generated switch drive signal (boost_drv) is adapted to control a time duration of the switch (27) being closed.

4. The converter device according to one of the preceding claims, **characterized in**

   **that** the generated switch drive signal (boost_drv) is adapted to control a time at which the switch (27) is closed, wherein the microcontroller circuit (9) is configured to determine the time based on the second signal (boost_zx).

5. Method for controlling a converter device (1), in particular an emergency lighting converter, operating from an energy storage device (2), the converter device (1) comprising

   a charger circuit (7) for charging the energy storage device (2), a driver circuit (12) including

   a switch (27), and
   a microcontroller circuit (9) for controlling the charger circuit (2), and
   that the method comprises steps of
   obtaining, by an input of a first analogue comparator (17) of the microcontroller circuit (9), a first signal (boost_cs) as an analogue signal including information on a discharge current of the energy storage device (2) from the driver circuit (12),
   obtaining, by an input of a second analogue comparator (18) of the microcontroller circuit (9), a second signal (boost_zx) as an analogue signal including information when a current through an inductor (L2) of the driver circuit (12) reaches zero,
   generating, by the microcontroller circuit (9), a switch drive signal (boost_drv) from the first signal (boost_cs) and the second signal (boost_zx),
   providing the generated switch drive signal (boost_drv) to the switch (27), and
   controlling, by the microcontroller circuit (9), the switch (27) with the switch drive signal (boost_drv) in a mode in which the driver circuit (12) is operated from the energy storage device (2),controlling, by the microcontroller circuit (9), the driver circuit (12) in a boundary conduction mode to maintain a predetermined current value of the discharge current ($I_{BATT}$) from the energy storage device (2), **characterized in that** the method further comprises steps of
   providing by the microcontroller circuit (9) to an inverting input of the first comparator circuit (17) of the microcontroller circuit (9) a first analogue reference signal (boost_CS_ref), by
   converting by an analogue-digital converter (25) of the microcontroller circuit (9) the analogue first signal (boost_CS) into a digital first signal (boost_CS) and providing by the analogue-digital converter (25) the digital first signal (boost_CS) to a CS reference generator (26) of the microcontroller circuit (9), and
   using by the CS reference generator (25) the digital first signal (boost_CS) to generate the digital first reference signal (boost_CS_ref) and providing by the CS reference generator (25) the digital first reference signal (boost_CS_ref) to a digital-analogue converter (23) of the microcontroller circuit (9), and
   converting by the digital-analogue converter (23) of the microcontroller circuit (9) the digital first reference signal (boos_CS_ref) into the analogue first reference signal (boos_CS_ref) and providing by the digital-analogue converter (23) of the microcontroller circuit (9) the analogue first reference signal (boost_CS_ref) to the inverting input of the first comparator (17).

**Patentansprüche**

1. Wandlervorrichtung, insbesondere ein Notbeleuchtungswandler, zum Betreiben von einer Energiespeichervorrichtung (2), die Wandlervorrichtung umfassend

    eine Ladeschaltung (7), die konfiguriert ist, um die Energiespeichervorrichtung (2) zu laden,
    eine Treiberschaltung (12), die einen Schalter (27) einschließt, und
    die Wandlervorrichtung ferner umfasst
    eine Mikrocontrollerschaltung (9), die konfiguriert ist, um die Ladeschaltung (7) zu steuern, und
    die Mikrocontrollerschaltung (9) ferner konfiguriert ist, um ein Schaltantriebssignal (boost_drv) aus einem ersten Signal (boost_cs) und einem zweiten Signal (boost_zx) zu erzeugen, um den Schalter (27) in einem Modus zu steuern, in dem die Treiberschaltung (12) von der Energiespeichervorrichtung (2) betrieben wird, und
    dass die Treiberschaltung (12) konfiguriert ist, um einem Eingang eines ersten analogen Komparators (17) der Mikrocontrollerschaltung (9) das erste Signal (boost_cs) als ein analoges Signal bereitzustellen, das Informationen über einen Entladestrom der Energiespeichervorrichtung (2) enthält, und
    die Treiberschaltung (12) konfiguriert ist, um einem Eingang eines zweiten analogen Komparators (18) der Mikrocontrollerschaltung (9) das zweite Signal (boost_zx) als ein analoges Signal bereitzustellen, das Informationen enthält, wenn ein Strom durch einen Induktor (L2) der Treiberschaltung (12) Null erreicht, wobei
    die Mikrocontrollerschaltung (9) konfiguriert ist, um die Treiberschaltung (12) in einem Grenzleitungsmodus zu steuern, um einen vorbestimmten Stromwert des Entladestroms ($I_{BATT}$) von der Energiespeichervorrichtung (2) aufrechtzuerhalten
    **dadurch gekennzeichnet, dass**
    die Mikrocontrollerschaltung (9) konfiguriert ist, um einem invertierenden Eingang der ersten Komparatorschaltung (17) der Mikrocontrollerschaltung (9) ein erstes analoges Referenzsignal (boost_CS_ref) bereitzustellen, wobei
    ein Analog-Digital-Wandler (25) der Mikrocontrollerschaltung (9) konfiguriert ist, um das analoge erste Signal (boost_CS) in ein digitales erstes Signal (boost_CS) umzuwandeln und das digitale erste Signal (boost_CS) an einen CS-Referenzgenerator (26) der Mikrocontrollerschaltung (9) bereitzustellen, und
    der CS-Referenzgenerator (26) konfiguriert ist, um das digitale erste Signal (boost_CS) zu verwenden, um das digitale erste Referenzsignal (boost_CS_ref) zu erzeugen und das digitale erste Referenzsignal (boost_CS_ref) an einen Digital-Analog-Wandler (23) der Mikrocontrollerschaltung (9) bereitzustellen, und
    der Digital-Analog-Wandler (23) der Mikrocontrollerschaltung (9) konfiguriert ist, um das digitale erste Referenzsignal (boos_CS_ref) in das analoge erste Referenzsignal (boos_CS_ref) umzuwandeln und das analoge erste Referenzsignal (boost_CS_ref) an den invertierenden Eingang des ersten Komparators (17) bereitzustellen.

2. Wandlervorrichtung nach Anspruch 1, **dadurch gekennzeichnet, dass**
   die Treiberschaltung (12) in einer gekoppelten Induktorverstärkungsschaltungstopologie implementiert ist.

3. Wandlervorrichtung nach einem der vorstehenden Ansprüche,
   **dadurch gekennzeichnet, dass**
   das erzeugte Schaltantriebssignal (boost_drv) angepasst ist, um eine Zeitdauer eines Schließens des Schalters (27) zu steuern.

4. Wandlervorrichtung nach einem der vorstehenden Ansprüche,
   **dadurch gekennzeichnet, dass**

    das erzeugte Schaltantriebssignal (boost_drv) angepasst ist, um einen Zeitpunkt zu steuern, zu dem der Schalter (27) geschlossen ist,
    wobei die Mikrocontrollerschaltung (9) konfiguriert ist, um die Zeit basierend auf dem zweiten Signal (boost_zx) zu bestimmen.

5. Verfahren zum Steuern einer Wandlervorrichtung (1), insbesondere eines Notbeleuchtungswandlers, die von einer Energiespeichervorrichtung (2) betrieben wird, die Wandlervorrichtung (1) umfassend

    eine Ladeschaltung (7) zum Laden der Energiespeichervorrichtung (2), eine Treiberschaltung (12), die einschließt

einen Schalter (27) und

eine Mikrocontrollerschaltung (9) zum Steuern der Ladeschaltung (2) und

dass das Verfahren die Schritte umfasst

Erhalten, durch einen Eingang eines ersten analogen Komparators (17) der Mikrocontrollerschaltung (9), eines ersten Signals (boost_cs) als ein analoges Signal, das Informationen über einen Entladestrom der Energiespeichervorrichtung (2) von der Treiberschaltung (12) einschließt,

Erhalten, durch einen Eingang eines zweiten analogen Komparators (18) der Mikrocontrollerschaltung (9), eines zweiten Signals (boost_zx) als ein analoges Signal, das Informationen einschließt, wenn ein Strom durch einen Induktor (L2) der Treiberschaltung (12) Null erreicht,

Erzeugen, durch die Mikrocontrollerschaltung (9), eines Schaltantriebssignals (boost_drv) aus dem ersten Signal (boost_cs) und dem zweiten Signal (boost_zx),

Bereitstellen des erzeugten Schaltantriebssignals (boost_drv) an den Schalter (27) und

Steuern, durch die Microcontrollerschaltung (9), des Schalters (27) mit dem Schaltantriebssignal (boost_drv) in einem Modus, in dem die Treiberschaltung (12) von der Energiespeichervorrichtung (2) betrieben wird, Steuern, durch die Microcontrollerschaltung (9), der Treiberschaltung (12) in einem Grenzleitungsmodus, um einen vorbestimmten Stromwert des Entladestroms ($I_{BATT}$) von der Energiespeichervorrichtung (2) aufrechtzuerhalten, **dadurch gekennzeichnet, dass** das Verfahren ferner die Schritte umfasst

Bereitstellen, durch die Mikrocontrollerschaltung (9) an einen invertierenden Eingang der ersten Komparatorschaltung (17) der Mikrocontrollerschaltung (9), eines ersten analogen Referenzsignals (boost_CS_ref) durch Umwandeln, durch einen Analog-Digital-Wandler (25) der Mikrocontrollerschaltung (9), des analogen ersten Signals (boost_CS) in ein digitales erstes Signal (boost_CS) und Bereitstellen, durch den Analog-Digital-Wandler (25), des digitalen ersten Signals (boost_CS) an einen CS-Referenzgenerator (26) der Mikrocontrollerschaltung (9) und

Verwenden, durch den CS-Referenzgenerator (25), des digitalen ersten Signals (boost_CS), um das digitale erste Referenzsignal (boost_CS_ref) zu erzeugen und Bereitstellen, durch den CS-Referenzgenerator (25), des digitalen ersten Referenzsignals (boost_CS_ref) an einen Digital-Analog-Wandler (23) der Mikrocontrollerschaltung (9), und

Umwandeln, durch den Digital-Analog-Wandler (23) der Mikrocontrollerschaltung (9), des digitalen ersten Referenzsignals (boos_CS_ref) in das analoge erste Referenzsignal (boos_CS_ref) und Bereitstellen, durch den Digital-Analog-Wandler (23) der Mikrocontrollerschaltung (9), des analogen ersten Referenzsignals (boost_CS_ref) an den invertierenden Eingang des ersten Komparators (17).

## Revendications

1.  Dispositif convertisseur, en particulier un convertisseur d'éclairage de secours, destiné à fonctionner à partir d'un dispositif de stockage d'énergie (2), le dispositif convertisseur comprenant

    un circuit chargeur (7) configuré pour charger le dispositif de stockage d'énergie (2),

    un circuit d'attaque (12) comportant un commutateur (27), et

    le dispositif convertisseur comprend en outre

    un circuit microcontrôleur (9) configuré pour commander le circuit chargeur (7), et

    le circuit microcontrôleur (9) est en outre configuré pour générer un signal d'attaque de commutateur (boost_drv) à partir d'un premier signal (boost_cs) et d'un second signal (boost_zx) pour commander le commutateur (27) dans un mode dans lequel le circuit d'attaque (12) fonctionne à partir du dispositif de stockage d'énergie (2), et

    le circuit d'attaque (12) est configuré pour fournir à une entrée d'un premier comparateur analogique (17) du circuit microcontrôleur (9) le premier signal (boost_cs) en tant que signal analogique contenant des informations sur un courant de décharge du dispositif de stockage d'énergie (2), et

    le circuit d'attaque (12) est configuré pour fournir à une entrée d'un second comparateur analogique (18) du circuit microcontrôleur (9) le second signal (boost_zx) en tant que signal analogique contenant des informations lorsqu'un courant traversant un inducteur (L2) du circuit d'attaque (12) atteint zéro,

    dans lequel

    le circuit microcontrôleur (9) est configuré pour commander le circuit d'attaque (12) dans un mode de conduction limite afin de maintenir une valeur de courant prédéterminée du courant de décharge ($I_{BATT}$) provenant du dispositif de stockage d'énergie (2)

    **caractérisé en ce que**

    le circuit microcontrôleur (9) est configuré pour fournir à une entrée inverseuse du premier circuit comparateur (17) du circuit microcontrôleur (9) un premier signal de référence analogique (boost_CS_ref), dans lequel

un convertisseur analogique-numérique (25) du circuit microcontrôleur (9) est configuré pour convertir le premier signal analogique (boost_CS) en un premier signal numérique (boost_CS) et pour fournir le premier signal numérique (boost_CS) à un générateur de référence CS (26) du circuit microcontrôleur (9), et

le générateur de référence CS (26) est configuré pour utiliser le premier signal numérique (boost_CS) pour générer le premier signal de référence numérique (boost_CS_ref) et pour fournir le premier signal de référence numérique (boost_CS_ref) à un convertisseur numérique-analogique (23) du circuit microcontrôleur (9), et

le convertisseur numérique-analogique (23) du circuit microcontrôleur (9) est configuré pour convertir le premier signal de référence numérique (boos_CS_ref) en un premier signal de référence analogique (boos_CS_ref) et pour fournir le premier signal de référence analogique (boost_CS_ref) à l'entrée inverseuse du premier comparateur (17).

2. Dispositif convertisseur selon la revendication 1, **caractérisé en que**
le circuit d'attaque (12) est mis en oeuvre dans une topologie de circuit élévateur à inductance couplée.

3. Dispositif convertisseur selon l'une des revendications précédentes, **caractérisé en ce que**
le signal d'attaque de commutateur généré (boost_drv) est adapté pour commander une durée de fermeture du commutateur (27).

4. Dispositif convertisseur selon l'une des revendications précédentes, **caractérisé en ce que**

le signal d'attaque de commutateur généré (boost_drv) est adapté pour commander un moment auquel le commutateur (27) est fermé,

dans lequel le circuit microcontrôleur (9) est configuré pour déterminer le moment sur la base du second signal (boost_zx).

5. Procédé de commande d'un dispositif convertisseur (1), en particulier d'un convertisseur d'éclairage de secours, fonctionnant à partir d'un dispositif de stockage d'énergie (2), le dispositif convertisseur (1) comprenant

un circuit chargeur (7) pour charger le dispositif de stockage d'énergie (2), un circuit d'attaque (12) comportant un commutateur (27), et

un circuit microcontrôleur (9) pour commander le circuit chargeur (2), et

le procédé comprenant les étapes consistant à

obtenir, par une entrée d'un premier comparateur analogique (17) du circuit microcontrôleur (9), un premier signal (boost_cs) en tant que signal analogique comportant des informations sur un courant de décharge du dispositif de stockage d'énergie (2) provenant du circuit d'attaque (12),

obtenir, par une entrée d'un second comparateur analogique (18) du circuit microcontrôleur (9), un second signal (boost_zx) en tant que signal analogique comportant des informations lorsqu'un courant traversant un inducteur (L2) du circuit d'attaque (12) atteint zéro,

générer, par le circuit microcontrôleur (9), un signal d'attaque de commutateur (boost_drv) à partir du premier signal (boost_cs) et du second signal (boost_zx),

fournir le signal d'attaque de commutateur généré (boost_drv) au commutateur (27), et

commander, par le circuit microcontrôleur (9), le commutateur (27) avec le signal d'attaque de commutateur (boost_drv) dans un mode dans lequel le circuit d'attaque (12) fonctionne à partir du dispositif de stockage d'énergie (2), commander, par le circuit microcontrôleur (9), le circuit d'attaque (12) dans un mode de conduction limite pour maintenir une valeur de courant prédéterminée du courant de décharge ($I_{BATT}$) provenant du dispositif de stockage d'énergie (2), **caractérisé en ce que** le procédé comprend en outre les étapes consistant à

fournir par le circuit microcontrôleur (9) à une entrée inverseuse du premier circuit comparateur (17) du circuit microcontrôleur (9) un premier signal de référence analogique (boost_CS_ref), en

convertissant par un convertisseur analogique-numérique (25) du circuit microcontrôleur (9) le premier signal analogique (boost_CS) en un premier signal numérique (boost_CS) et en fournissant par le convertisseur analogique-numérique (25) le premier signal numérique (boost_CS) à un générateur de référence CS (26) du circuit microcontrôleur (9), et

utiliser par le générateur de référence CS (25) le premier signal numérique (boost_CS) pour générer le premier signal de référence numérique (boost_CS_ref) et fournir par le générateur de référence CS (25) le premier signal de référence numérique (boost_CS_ref) à un convertisseur numérique-analogique (23) du circuit microcontrôleur (9), et

convertir par le convertisseur numérique-analogique (23) du circuit microcontrôleur (9) le premier signal de référence numérique (boos_CS_ref) en le premier signal de référence analogique (boos_CS_ref) et fournir par le convertisseur numérique-analogique (23) du circuit microcontrôleur (9) le premier signal de référence analogique (boost_CS_ref) à l'entrée inverseuse du premier comparateur (17).

230V

14 · 8 · 1 · 2

| EMI | FLYBACK |

7 · BATTERY CHARGER

BATTERY

RELAIS · 15

16 · LVPS

11 · 4

μC · 9

LED DRIVER · 12

OUTPUT RELAIS

LED

SELV

5 · TEST

INDICATOR · 10

6 · LED CONTROL

Fig. 1

**Fig. 2**

**Fig. 3**

Fig. 4

Fig. 5A

$I_{pk}$

$I_{L1}$

$\dfrac{I_{pk}}{1+n}$

$I_{Q,pk}$

$I_{D,pk}$

t

Fig. 5B

$V_Q$

$\dfrac{N_1 V_O + N_2 V_{BATT}}{N_1 + N_2}$

t

Fig. 5C

$V_D = V_O + n V_{BATT}$

t

$t_{ON} = DT_S$

$t_{OFF} = (1-D) T_S$

$T_S$

Fig. 5

Fig. 6

```
┌─────────────────────────────────────┐
│         ACQUIRE boost_CS             │──── S1
└─────────────────────────────────────┘
                   │
                   ▼
┌─────────────────────────────────────┐
│         ACQUIRE boost_ZX             │──── S2
└─────────────────────────────────────┘
                   │
                   ▼
┌─────────────────────────────────────┐
│         COMPARE boost_CS             │──── S3
│        with boost_CS_ref             │
└─────────────────────────────────────┘
                   │
                   ▼
┌─────────────────────────────────────┐
│         COMPARE boost_ZX             │──── S4
│        with boost_ZX_ref             │
└─────────────────────────────────────┘
                   │
                   ▼
┌─────────────────────────────────────┐
│        GENERATE boost_drv            │──── S5
└─────────────────────────────────────┘
```

**Fig. 7**

**EP 3 407 682 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20110210681 A

### Non-patent literature cited in the description

- *AN2761 Application note - Solution for designing a transition mode PFC preregulator with the L6562A Contents,* 31 December 2009, 1-36